# EUROPEAN PATENT APPLICATION

(11) **EP 3 654 661 A1**
(43) Date of publication of application: **20.05.2020**
(21) Application number: 18207113.4
(22) Date of filing: 19.11.2018
(51) Int. Cl.: H04N 21/84, H04N 21/236, H04N 7/08

(54) **A METHOD AND SYSTEM FOR COLLECTING ELECTRONIC PROGRAMME GUIDE DATA FROM MULTIPLE TRANSPORT STREAMS**

(71) Applicant: Advanced Digital Broadcast S.A., 1293 Bellevue (CH)
(72) Inventor: Polak, Michal, 65-119 Zielona Gora (PL)
(74) Representative: Kancelaria Eupatent.pl Sp. z.o.o

(57) **Abstract**

A method for collecting, in a digital television receiver (STB), electronic program guide (EPG) data from event information tables (EIT) of multiple transport streams (TS), the method comprising the steps of: generating (302) a list (KT) of known transport streams; checking (303) if the list (KT) of the known transport streams contains a transport stream without specific properties and if so, assigning (304) the specific properties to that transport stream; wherein the specific properties include: a "main" property that is set to true if he property "main" is set to true if the service that is being currently presented belongs to that TS, otherwise the "main" is set to false; a "connected" property that is set to true if the TS has been and is currently tuned to, otherwise the "connected" is set to false; updating (305) the values of the transport streams properties; generating (307) a prioritized list (TT) of tunable transport streams; adding (309) transport streams with a "main" property equal to true at the beginning of the list (TT) of the tunable transport streams; adding (310) transport streams with the "main" property equal to false and a "connected" property equal to true at the end of the list (TT) of the tunable transport streams; adding (311) the transport streams with the "connected" property equal to false at the end of the list (TT) of the tunable transport streams; determining (312) whether the digital television receiver (STB) may connect to further transport streams and if so, tuning (314) to the transport streams in the list (TT) of the tunable transport streams with "connected" property equal to false; and collecting (315) the electronic program guide (EPG) data from the event information tables (EIT) of the transport streams (TS) to which the digital television receiver (STB) is tuned to.

## Description

### TECHNICAL FIELD

The present disclosure relates to collecting electronic programme guide data from multiple transport streams, in particular to concurrent monitoring of event information tables from multiple transport streams in a set-top-box system.

### BACKGROUND

Users of digital television systems can instantly access large amount of content at any given time from various sources.

A well-known method of presenting available content is a grid-type Electronic Programme Guide (EPG) or an Interactive Program Guide (IPG), which typically has a timeline along its X axis and lists available channels on a Y axis, wherein programmes (events) available at a particular channel at a particular time i.e. current and future events as well as events in the past (catch-up events) are presented in cells within the grid. A digital television receiver, called a Set-Top-Box (STB), retrieves EPG information from Event Information Tables (EIT) sections and processes them into events that are then displayed on a TV screen.

The EPG information collected and monitored by the STB is usually strictly related to the services the user watched or which are being watched, i.e. to which transport streams the STB was tuned to or which it is currently tuned. For example, an EPG software module of the STB may retrieve the EIT sections from the Transport Stream (TS) which contains the service that the user is currently watching. This is a reasonable approach, as the EPG information presented to the user is expected to be directly linked with the service that has been selected. Furthermore, it does not require any additional hardware-scarce resources like tuners, demodulators and demultiplexers (apart from the filters for EPG information) - the EPG data is just retrieved from the TS that has been connected to as to watch the selected service. Also, when recording a service, a TS with the service being recorded is connected, so the EPG information broadcast on that TS could be used to retrieve EPG information as well - yet, it should be noted that this may be a different TS than the one with the service being watched (if any) - providing that hardware components like aforementioned tuners, demodulators, demultiplexers and external components such as a low-noise block converter (in case of a satellite STB) allow to do so. However, in a case when another TS has been tuned to, apart from the one associated with the service being watched, the EPG modules do not have to collect the EIT sections from that another TS, as not to make EPG modules of the STB more complex by processing additional EPG information and mixing events from various transport streams, which may also require additional resources like the CPU (Central Processing Unit) time and STB memory. Some STBs may also monitor EPG information when no service is being watched, for example in an active standby mode. In such a case, the EPG information is retrieved from a TS (for example, an arbitrary or preferred one) that has been connected, e.g. as a result of another action carried out by the STB as searching a new firmware version or monitoring subscription information.

On the other hand, collecting EPG information just from the TS that has been connected, because the user had selected a given service, leads to a situation where a number of services are presented by the Graphical User Interface (GUI) without EPG information. This is because the user did not select any service belonging to the transport stream in context of which the EPG information for those services would be available in actual EIT sections, or because other transport streams the STB was tuned to, did not include that information in other EIT sections. It could have also happened that the STB was tuned too shortly on such transport streams to let the STB EPG module collect the EPG information for individual services. As a result, if the user wants to see what programmes (events) shall be broadcast for a service that the GUI has presented without events, the user has to interrupt watching the currently selected service and tune to the transport stream with the service for which the user would like to see present/following and schedule events - assuming that actual EIT sections for the newly selected services are available within that TS.

Therefore, there is a need to provide a method for concurrent monitoring of event information tables from multiple transport streams, which would allow the user to access EPG information concerning a particular service without the need of selecting this service.

### SUMMARY

There is disclosed herein a method for collecting, in a digital television receiver, electronic program guide data from event information tables of multiple transport streams, the method comprising the steps of: generating a list of known transport streams; checking if the list of the known transport streams contains a transport stream without specific properties and if so, assigning the specific properties to that transport stream; wherein the specific properties include: a "main" property that is set to true if the service that is being currently presented belongs to that TS, otherwise the "main" is set to false; a "connected" property that is set to true if the TS has been and is currently tuned to, otherwise the "connected" is set to false; updating the values of the transport streams properties; generating a prioritized list of tunable transport streams; adding transport streams with a "main" property equal to true at the beginning of the list of the tunable transport streams; adding transport streams with the "main" property equal to false and a "connected" property equal to true at the end of the list of the tunable transport streams; adding the transport streams with the "connected" property equal to false at the end of the list of the tunable transport streams; determining whether the digital television receiver may connect to further transport streams and if so, tuning to the transport streams in the list of the tunable transport streams with "connected" property equal to false; and collecting the electronic program guide data from the event information tables of the transport streams to which the digital television receiver is tuned to.

Preferably, the method is initiated by detecting a change in a list of transport streams.

Preferably, the specific properties further include a "timestamp" property that is set to the current time, and wherein the method further includes, before adding the transport streams with the "connected" property equal to false, sorting the transport streams in an ascending order according to their value of the "timestamp" property.

Preferably, the method further comprises, upon collecting the electronic program guide data, updating the electronic programme guide events in an EPG database of the digital television receiver, comprising: receiving an event from an event information table from a section with a new version in a transport stream; comparing priority of the received event and a corresponding event in the EPG database; comparing the "timestamp" property of the received event and a corresponding event in the EPG database; and updating the EPG database by replacing the corresponding event in the EPG database with the received event.

Preferably, the method comprises updating the EPG database by replacing more than one corresponding event with the received event if the received event overlaps entirely or partially with more than one event in the EPG database.

There is also disclosed a computer program comprising program code means for performing all the steps of the computer-implemented method as described herein when said program is run on a computer, as well as a computer readable medium storing computer-executable instructions performing all the steps of the computer-implemented method as described herein when executed on a computer.

There is also disclosed a system for collecting, in a digital television receiver, electronic program guide data from event information tables of multiple transport streams, the system comprising an EPG module configured to execute the steps of the method as described herein.

### BRIEF DESCRIPTION OF DRAWINGS

The method and system presented herein are presented by means of example embodiments on a drawing, wherein:
Figs. 1A-1D show examples of EPG data presentation methods;
Fig. 2 shows an example of an STB system;
Figs. 3A-3C show a flowchart of a method for tuning to a number of transport streams concurrently;
Fig. 4 shows a flowchart of a method for inserting and updating of the EPG events in an EPG database.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

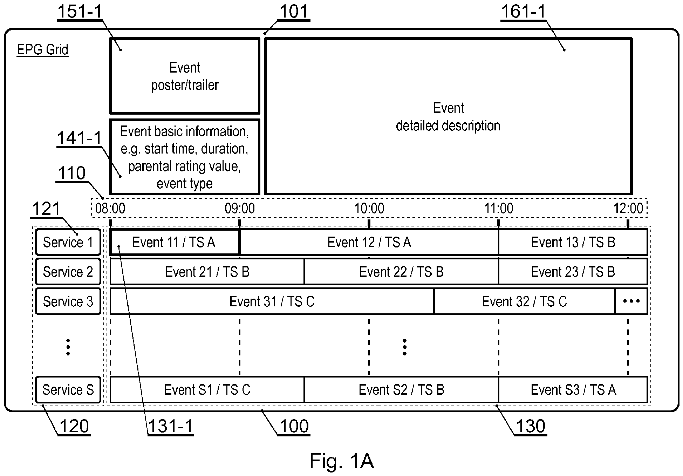

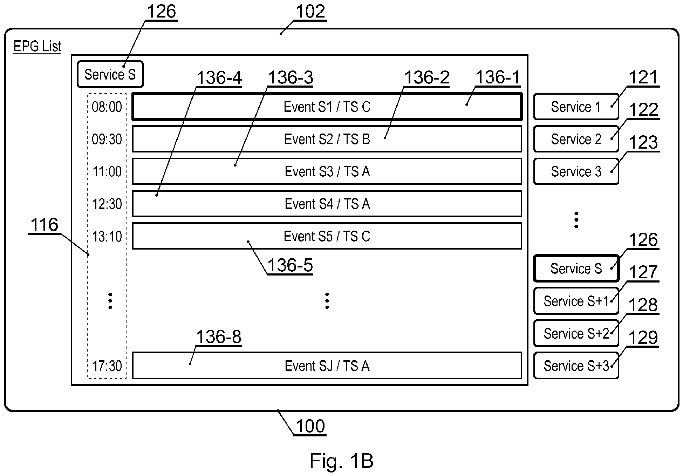

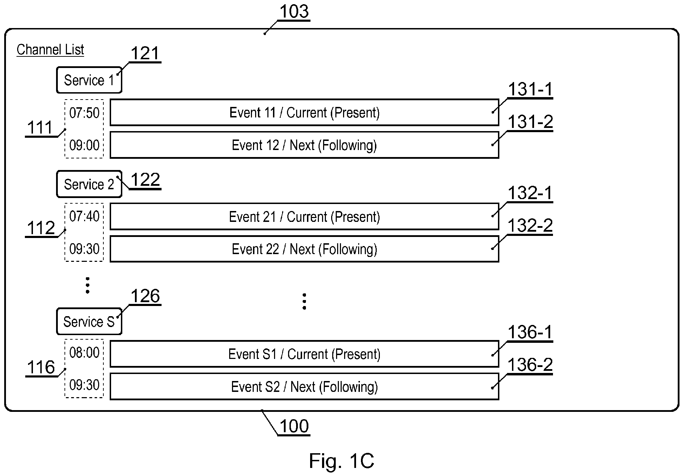

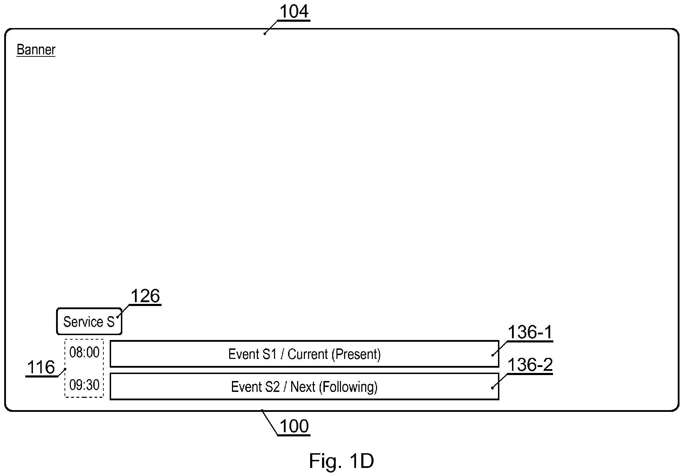

Figs. 1A-1D show various EPG data presentation methods. A digital television receiver, such as an STB, retrieves EPG information from EIT sections and processes them into events that are then displayed on a TV screen. The EPG data can be presented in various manners, for example as a channel (service) list 103 showing available services 121-126 and for each service presenting current and following events 131-1, 131-2 - 136-1, 136-2 and their starting times 111-116, or similarly in a form of a banner 104 presenting current and following events 136-1, 136-2 for a single service 126. The available content may be also presented by means of the grid-type EPG 101 which has a timeline 110 along its X axis and lists available channels 120 on a Y axis, wherein programmes (events) available at a particular channel 121 at a particular time i.e. current and future events 130 are presented in cells within the grid. The grid-type EPG may also present information concerning the selected event 131-1, such as event poster or trailer 151-1, its basic information 141-1 such as start time, duration, parental rating value, event type, and detailed description of the selected event 161-1. The available content may be also presented in a list-type EPG 102, wherein for a particular channel 126 selected from a list of services 121-129, current and future events 136-1 - 136-8 are presented in a form of a list having a timeline 116 along its vertical Y axis.

The EIT section contains events for a single service. There are various number of event types like the aforementioned present and following events - describing the current and next events, or schedule events containing information for a particular day starting from midnight of the current day (today). Events in the EIT section can refer either to services included in a given TS (the actual TS) or to services belonging to another transport stream (another TS). An EIT Table Identifier (TID) determines the type of events the given EIT section includes, such as: present/following or schedule event information and actual/other transport stream. In case of the schedule event information, the EIT TID refers also to a time segment containing information when the events within such EIT section commence. Hence, the EIT sections of individual types, for a given time offset, may be retrieved in a straightforward way. The EIT sections are broadcast with various frequencies (repetition rates) depending on their TIDs and the delivery system (such as a satellite, a cable or a terrestrial). For instance, events with the present/following information for another TS (multiplex) for the satellite and cable systems should be repeated at least every 10 seconds, while the events of the same type broadcast in the terrestrial system should be available at least every 20 seconds.

The STB collects and updates information found in the EIT sections from transport streams whenever they are available, for example when the STB has been tuned to a TS because the user has selected a service belonging to that multiplex, in some cases also when the STB is recording a service, monitoring subscription information or looking for firmware upgrade is taking place. This ensures that EPG information presented to the user is - to some extend - available and up-to-date.

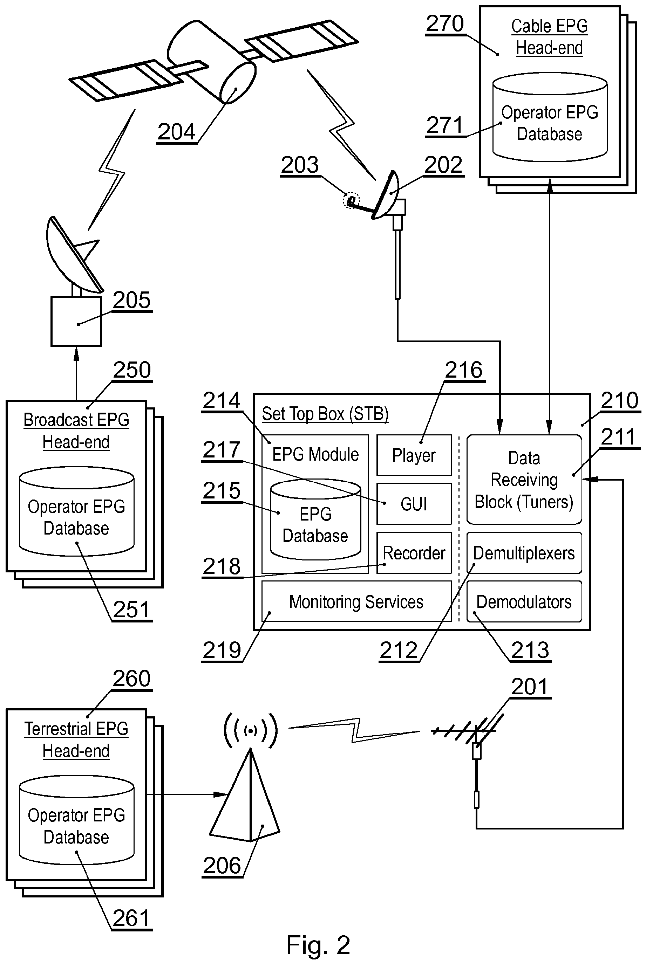

Fig. 2 shows an exemplary STB system in which content data is received from various sources. The system comprises an STB 210, which has a GUI module 217 responsible for generating a graphical user interface, a data receiving block 211 configured to receive downstream data, such as video content, from the broadcasting distribution network. The data receiving block 211 (also called a front-end block) may comprise a plurality of tuners (such as satellite, cable, terrestrial or IPTV tuners), wherein one of the tuners receives content to be displayed by a player 216 at the television screen to which the STB is directly connected and another tuner receives content for example to be recorded by a recorder 218 at the HDD for later use. In the presented example the data receiving block 211 receives downstream data from multiple external EPG head-ends such as a broadcast EPG head-end 250, comprising an EPG database 251, from which data is received by means of satellites 203-205, a cable EPG head-end 270, comprising an EPG database 271, from which data is received directly by cable connection, or a terrestrial EPG head-end 260, comprising an EPG database 261, from which data is received by means of terrestrial antennas 201, 206. The STB 210 further comprises monitoring services module 219 which monitors EPG data available for various transport streams. The EPG data is managed by an EPG module 214 and stored in an EPG database 215.

According to the present invention the EPG information is collected from a number of transport streams in an organized manner concurrently. A list of known transport streams is based on the list of services the user may select. Each transport stream is associated with metadata (properties) specifying when the TS monitoring action was finished (a TS is considered as checked if the STB was tuned to it for a configured amount of time) and if the transport stream is in the connected state (the STB has been tuned to it). The introduced method determines the STB system capabilities, for example how many transport streams can be retrieved at a time and how many of them can be used for EPG monitoring. The number of concurrent transport streams the STB may be tuned to, depends on the number of demultiplexers 212, demodulators 213 and tuners (211) the STB 210 is equipped with. Also, in case of a satellite STB, types of LNB converters (a legacy/standard LNB - single, twin, quad, quattro, etc.; Unicable; wideband/fullband) are essential, as they can limit or extend the number of the transport streams that may be tuned to at a time. For instance, in case of a single legacy LNB, an additional transport to be monitored must be in the same quarter of the satellite signal (the same horizontal/vertical polarization and the same low/high band) as the TS already connected. The tunable TS list is sorted in such a way that the transport stream with the service currently being watched (if any) is put at the top of the list, then starting from the second position (if more tunable transport streams are available), the transport streams that were previously tuned to are placed, finally all remaining tunable transport streams are ordered by their checked statuses and timestamps in the ascending order (the earlier tuned to in the past first). The EPG system either just attempts to retrieve EIT sections from these transport streams if they have been already connected to (because of another STB activity like watching a service, recording a service, monitoring some non-EPG information) or carry out an action to tune to transport streams in a low priority mode - meaning that any other action shall take over used resources as demultiplexers, demodulators or a tuner. Note that by a service being watched is understood the main broadcast service, i.e. the one with components like audio and optionally subtitles, apart from video, being presented. This entails also that, for example, a PIP (Picture-In-Picture) service is not considered as the one being watched. Transport streams that are not tunable at a given time, are removed from the list of tunable transport streams. As a result the EIT sections with events from multiple transport streams are being received in parallel.

The event has metadata (properties) that specifies the timestamp when the event was added to the database or updated an existing event(s) in the database, and the transport stream ID the event has been collected from (for the first time or updated). The transport stream ID is a pair of two 16-bit long EIT fields - original_network_id (ONID) and transport_stream_id (TSID). The EIT sections are processed only if individual tables versions in a given TS have not been handled yet after the version change. The event is always added to the EPG database 215 of the STB or always updates the existing event(s) in the database (the same service, the same values of start time and duration or covering them partially or entirely) if it has been received from the transport stream containing the main broadcast service being watched. If the received event does not exist in the database, then it is added. Otherwise, if the received event would update an existing event in the database (or events, providing the received event covers by its start time and duration - partially or entirely - one or more events for a given service), it updates (and removes covering events) only if the transport stream, that the event comes from, is of a higher priority than the one already stored within the database and the timestamp of the event in the database is in the past for a configured amount of time (for example 5 or 60 minutes). These conditions prevent from constant updating the database, however the events for the service being watched are being uninterruptedly monitored and update the database immediately.

Whenever a change in the list available and tunable transport streams occurs, this method (algorithm) starts over.

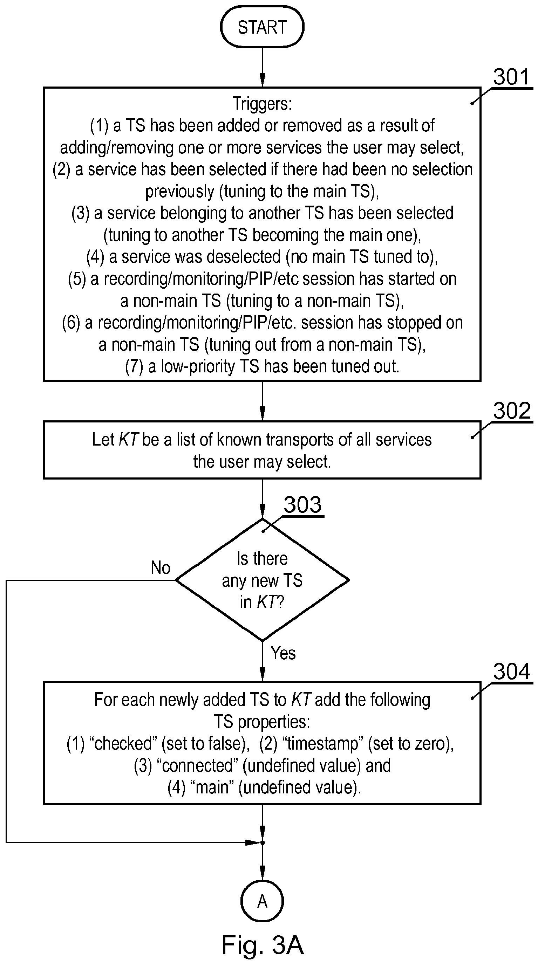

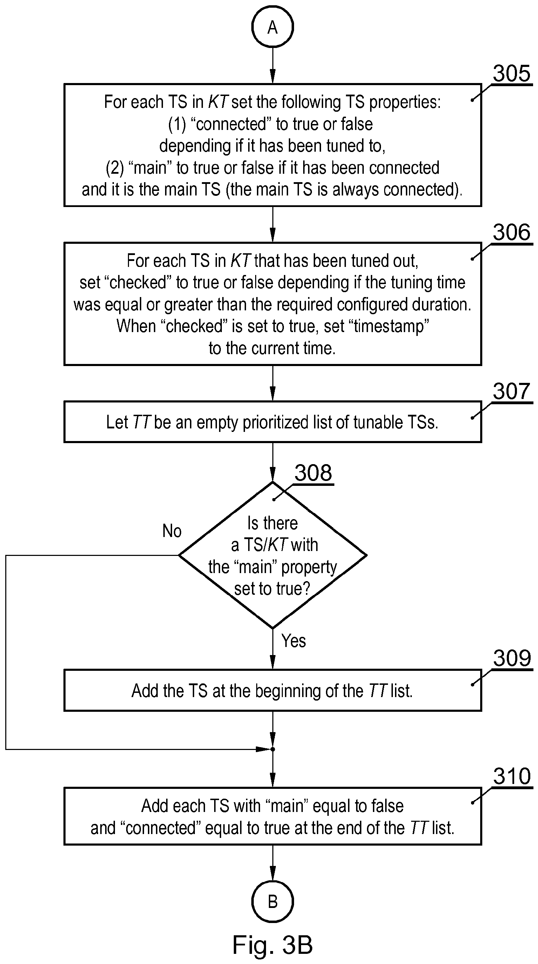

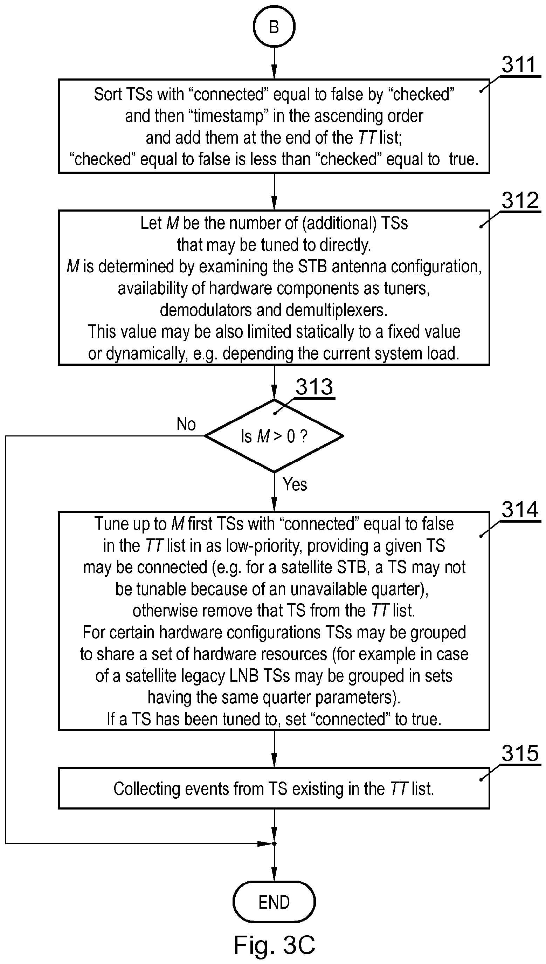

Figs. 3A-3C show a flowchart of a method for tuning to a number of transport streams to collect EIT events from more TSs than just the single TS associated with the main selection service at a time. The method is triggered by a change in the list of transport streams (such as added/removed, tuned to/tuned out), therefore first in step 301, by scanning or monitoring transport streams or service lists broadcast in one or more transport streams, it is checked if the transport stream is added or removed, or it is checked if a service is selected or stopped or changed by the user as the main selection which results in a change of the transport stream containing the main service being presented, such a TS is called the main TS, or it is checked if another transport stream is tuned to or tuned out because of starting/stopping a recording, a PIP session, monitoring session etc., such TS is called a non-main TS, or it is checked if a low-priority transport stream is tuned out, such a TS is called a non-main low-priority TS and by the low-priority state it is understood that such TS may be tuned out by another STB module at any time, for example to start a recording or monitoring activity. Next, in step 302, a list of known services (KT) is built. Such a list includes transport streams for all services that the user may select, e.g. for which EPG data may be presented by the GUI. The KT list does not include, in particular, the transport streams with non-presentable services only, e.g. download, subscription or application data. Next, in step 303 it is checked if the KT list includes any new transport stream - such transport stream does not yet contain metadata (properties) specific for this system. If there is no new TS, the method jumps directly to step 305, otherwise it continues to step 304 in which metadata such as "checked", "timestamp", "connected", "main" are added to the transport stream. For each newly added TS these specific properties are added with initial values.

The "checked" property indicates whether a given TS is considered as already monitored, e.g. all EIT sections broadcast on that TS have been collected. The "checked" property can be set to true only if the TS was tuned to for N seconds without interruption. The value of N depends on the delivery systems and it is a double of the worst case value of the values mentioned in the "Minimum repetition rates" section in ETSI TS 101 211 for EIT Schedule table for other TS. For satellite/cable delivery systems N can be equal to 60 seconds, whereas for terrestrial delivery systems N can be equal to 600 seconds. Still, for a given STB deployment N may be set to another value, depending on other factors, for example to ensure that only information concerning present and following events is caught.

Next, in step 305, for each TS the values of its properties are set:
- the property "connected" is set to true if the TS has been and is currently tuned to, otherwise the "connected" is set to false;
- the property "main" is set to true if the service that is being currently presented belongs to that TS, otherwise the "main" is set to false.
Next, in step 306, for each TS it is checked if it was tuned out (whether it is not connected anymore, no EIT sections are being retrieved from that TS). If the duration for which a given TS was previously tuned to is greater or equal to the configured value described in the step 304 above, then the "checked" property is set to true and the "timestamp" property is set to the current time, otherwise the "checked" property is set to false and the "timestamp" remains unchanged. Next, in step 307 an empty list of tunable and prioritized transport streams is created (TT). Next, in step 308, it is checked if there exists the TS (in the KT list) with the "main" property equal to true. If yes, then in step 309 the main TS is added at the beginning of the TT list, otherwise the method jumps directly to step 310, in which each non-main transport stream ("main" equal to false), but being in the connected state ("connected" equal to true) is added at the end of the TT list, meaning the list is filled with these transport streams from the first free position in the TT list.

Next, in step 311 all remaining transport streams having the "connected" property equal to false are sorted in such a way, that transport streams with the "checked" property equal to false sorted in ascending order by the "timestamp" are added at the end of the TT list, then the transport streams with the "checked" property equal to true ordered in the same way are also put at the end of the TT list. After this step the TT list includes prioritized (ordered) transport streams with the main transport stream (if any) at the beginning, subsequently all remaining connected transport streams, and then all not connected and not checked transport streams, and finally not connected but checked ones.

Next, in step 312 a maximum number of M transport streams is determined that may be tuned to directly by the STB. If the main service has been connected, M is the additional number of transport streams (the TS with the main service being presented is not counted). The value M is determined by examining the available STB hardware components such as the tuners, the demodulators or the demultiplexers and their capabilities as well as the antenna configuration. The value M may be also limited to a fixed maximum value statically (through configuration) or changed dynamically (between 0 and the maximum value), for example, depending on the current system load (in such a case if more than M transport streams has been connected/tuned to, some of them may be forced to be disconnected/tuned out at any time). Also M can be set to zero in case of a cable STB, if each TS in the cable network convoys the same EPG information.

Next, in step 313 it is checked if M is greater than zero. If no, then the procedure terminates, otherwise it moves to step 314, in which up to M non-connected transport streams ("connected" equal to false) are being connected (tuned to) in a low-priority mode as to receive the EIT sections from these transport streams. If the TS was tuned to then the "connected" property is set to true. By the low-priority mode it is understood that such a low-priority TS may be tuned out at any time, when another STB module is requesting access to scarce resources used by such low-priority transport stream.

In the step 314, a number of transport streams may be grouped together into subsets to reuse certain hardware components. An example includes a satellite STB with a single legacy (standard) LNB being tuned to a quarter with the same polarization (vertical/horizontal) and band (low/high). All transport streams within that subset may share the same tuner and demodulator. If a given TS may not be tuned to, it is removed from the TT list.

Finally, the procedure collects (315) the EPG data from the EIT of the TS to which the STB is tuned to.

Owing to the method described above EIT sections can be collected from a number of transport streams concurrently in step 315.

EPG events included in the EIT sections are processed and handled by the STB EPG module, which implements a method that enables prioritized inserting and updating of the EPG events in the EPG database 215 of the STB.

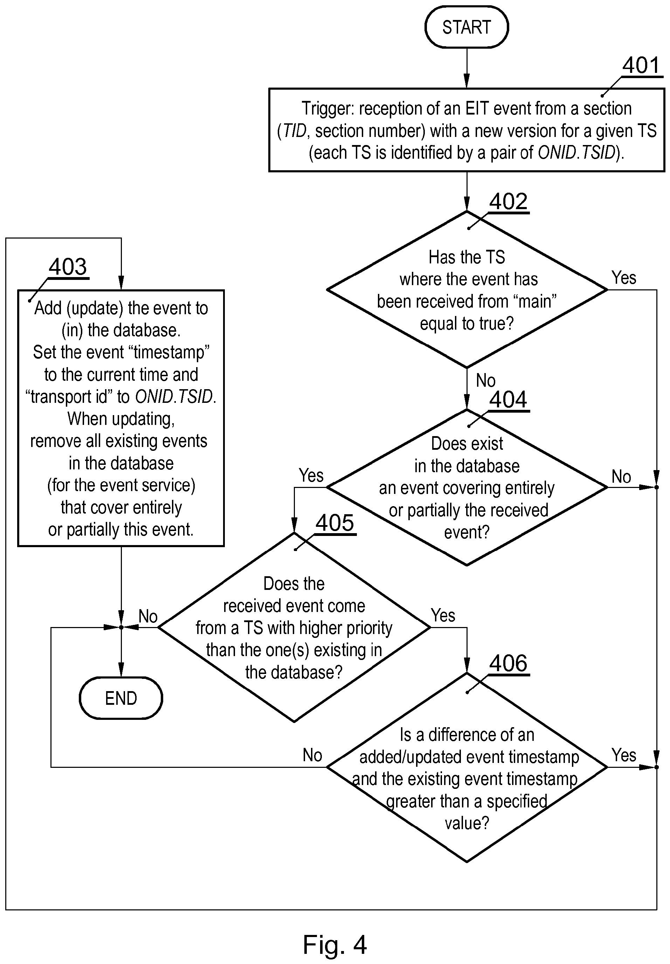

Fig. 4 shows a flowchart of a method for inserting and updating of the EPG events in the EPG database 215. First, in step 401 the event from the EIT section is collected (from step 315). Only EIT sections with the TID, a section number and a version not processed from a given transport stream after the version change, are processed. Each TS is uniquely identified by a pair ONID.TSID (an unsigned 32 bit long number) - original network ID and transport stream ID. Next, in step 402 it is checked if the event is retrieved from the main TS. If yes, the flow jumps to step 403, where the event is added to the EPG database 215, or the event updates one or more existing events (covering partially or entirely the received event) for the given service. The event properties (metadata) "timestamp" and "transport id" are set to - accordingly - the current time and the ONID.TSID pair. Next the process terminates. Otherwise, if in step 402 the event is not retrieved from the main TS then the procedure continues to step 404, in which it is checked if there is at least one event in the database 215 covering partially or entirely the received event. If there is none, the procedure jumps to the step 403, otherwise it continues to step 405 in which it is checked if the event was collected from a TS of a higher priority, i.e. being on the lower position in the TT list, than any events covering partially or entirely these events already existing in the EPG database 215. If the transport stream priority is lower, the event is skipped and the procedure terminates. Otherwise, the procedure continues to step 406, in which it is checked when the event(s) in the EGP database 215 that covers partially or entirely the collected event were added or updated. A difference between the current time and the already existing event "timestamp" property (or the "timestamp" property value of the oldest event, if more than one event are considered to be updated) must be equal or greater than a configured value, for example 300 seconds or 3600 seconds. This condition is aimed at preventing from updating the EPG database 215 too frequently and the exact value depends on a number of factors, including the system performance indexes. If the event is to be added or updated, the procedure jumps to the step 403, otherwise the procedure terminates.

Owing the presented methods it is feasible to retrieve the EIT sections from many transport streams in parallel and inserting/updating the EPG database 215 taking into account priorities of the transport streams.

The prioritizing method can be altered, for example to take into account also the time for which a given transport stream was in the connected state as the main one within a given period (for example within the last 24 or 72 hours). Transport streams that were connected as main ones most frequently, can be moved upwards in the TT list, so that events from such TSs could be received and updated more frequently than from other transport streams.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for concurrent monitoring of event information tables from multiple transport streams may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for collecting, in a digital television receiver (STB), electronic program guide (EPG) data from event information tables (EIT) of multiple transport streams (TS), the method comprising the steps of:
- generating (302) a list (KT) of known transport streams;
- checking (303) if the list (KT) of the known transport streams contains a transport stream without specific properties and if so, assigning (304) the specific properties to that transport stream; wherein the specific properties include:
- a "main" property that is set to true if he property "main" is set to true if the service that is being currently presented belongs to that TS, otherwise the "main" is set to false;
- a "connected" property that is set to true if the TS has been and is currently tuned to, otherwise the "connected" is set to false;
- updating (305) the values of the transport streams properties;
- generating (307) a prioritized list (TT) of tunable transport streams;
- adding (309) transport streams with a "main" property equal to true at the beginning of the list (TT) of the tunable transport streams;
- adding (310) transport streams with the "main" property equal to false and a "connected" property equal to true at the end of the list (TT) of the tunable transport streams;
- adding (311) the transport streams with the "connected" property equal to false at the end of the list (TT) of the tunable transport streams;
- determining (312) whether the digital television receiver (STB) may connect to further transport streams and if so, tuning (314) to the transport streams in the list (TT) of the tunable transport streams with "connected" property equal to false; and
- collecting (315) the electronic program guide (EPG) data from the event information tables (EIT) of the transport streams (TS) to which the digital television receiver (STB) is tuned to.

2. The method according to claim 1, initiated by detecting (301) a change in a list of transport streams, including added/removed and/or tuned to/tuned out.

3. The method according to any of previous claims, wherein the specific properties further include a "timestamp" property that is set to the current time, and wherein the method further includes, before adding (311) the transport streams with the "connected" property equal to false, sorting the transport streams in an ascending order according to their value of the "timestamp" property.

4. The method according to claim 3, further comprising, upon collecting (315) the electronic program guide (EPG) data, updating the electronic programme guide (EPG) events in an EPG database (215) of the digital television receiver (STB), comprising:
- receiving (401) an event from an event information table from a section with a new version in a transport stream;
- comparing (405) priority of the received event and a corresponding event in the EPG database (215);
- comparing (406) the "timestamp" property of the received event and a corresponding event in the EPG database (215); and
- updating (403) the EPG database (215) by replacing the corresponding event in the EPG database (215) with the received event.

5. The method according to claim 4, comprising updating the EPG database (215) by replacing more than one corresponding event with the received event if the received event overlaps entirely or partially with more than one event in the EPG database (215).

6. A computer program comprising program code means for performing all the steps of the computer-implemented method according to any of claims 1-5 when said program is run on a computer.

7. A computer readable medium storing computer-executable instructions performing all the steps of the computer-implemented method according to any of claims 1-5 when executed on a computer.

8. A system for collecting, in a digital television receiver (STB), electronic program guide (EPG) data from event information tables (EIT) of multiple transport streams (TS), the system comprising an EPG module (214) configured to execute the steps of the method according to any of claims 1-5.
